# EUROPÄISCHE PATENTANMELDUNG

(11) **EP 0 945 738 A2**
(43) Veröffentlichungstag der Anmeldung: **29.09.1999**
(21) Anmeldenummer: 99103266.5
(22) Anmeldetag: 19.02.1999
(51) Int. Cl.: G01S 7/521

(54) **Unterwasser-Sensoreinrichtung**

(30) Priorität: 26.03.1998 DE 19813297
(71) Anmelder: STN ATLAS Marine Electronics GmbH, 22763 Hamburg (DE)
(72) Erfinder: Wentzell, Hubertus, 28209 Bremen (DE)

(57) **Zusammenfassung**

Eine Unterwassersensoreinrichtung für mindestens eine in einem Wasserfahrzeug eingerüstete Unterwassermeßanlage, wie Echolot, Fahrgeschwindigkeitsmesser u. dgl., weist mindestens einen ins Wasser eintauchenden Sensor (10) auf, der als mindestens ein Sensorelement (12) umschließender Formkörper (14) ausgebildet ist. Zwecks erleichterter Montage und Demontage und größerer Wartungsfreundlichkeit der Sensoreinrichtung erhält der Formkörper (14) eine solche Formgestaltung, daß er zusammen mit mindestens einem weiteren Formkörper (15) zu einem Vollzylinder (16) zusammensetzbar ist. Der weitere Formkörper (15) stellt vorzugsweise einen weiteren Sensor (11) für eine weitere im Wasserfahrzeug eingerüstete Unterwassermeßanlage dar.

## Beschreibung

Die Erfindung betrifft eine Unterwasser-Sensoreinrichtung für mindestens eine in einem Wasserfahrzeug eingerüstete Unterwassermeßanlage, wie Echolot, Fahrgeschwindigkeitsmesser u.dgl., der im Oberbegriff des Anspruchs 1 definierten Gattung.

Bei einem bekannten, als Dopplerlog bezeichneten Fahrgeschwindigkeitsmesser zur Messung der Fahrt eines Schiffes durch Wasser (Leitfaden der Navigation transpress VEB Verlag für Verkehrswesen, Berlin, 1979, Seite 476 - 479) ist der als elektroakustischer Wandler ausgebildete Sensor, dort Schallschwinger genannt, mit einem Seeventil in einer Baueinheit vereinigt. Üblicherweise enthält ein solcher elektroakustischer Wandler eine Vielzahl von Wandlerelementen, die zu einem Körper vergossen sind. In der Betriebslage des Wandlers ist das Seeventil geöffnet, und der Wandler schließt bündig mit dem Schiffsboden ab. Der Wandler kann bei fahrendem Schiff gewartet und bei Beschädigungen ausgetauscht werden, indem er eingezogen und anschließend das Seeventil geschlossen wird.

Eine bekannte Fahrtmeßanlage für Wasserfahrzeuge (DE 195 48 017 C 1) weist ein Dopplerlog mit einem eine Mehrzahl von Wandlerelementen enthaltenden elektroakustischen Wandler und ein die Fahrt durchs Wasser messendes elektromagnetisches Log, ein sog. EM-Log, auf, dessen elektromagnetischer Meßsensor mit dem elektroakustischen Wandler in einem gemeinsamen Gehäuse untergebracht ist, das mittels Befestigungsschrauben am Rumpf des Wasserfahrzeugs befestigt ist. Die Wandler sind über wasserdichte Anschlußstecker und durch eine Durchführung im Fahrzeugrumpf hindurchgeführte Anschlußkabel mit der Fahrtmeßanlage verbunden. Der Austausch der Sensoren bei Defekt kann nur nach Demontage des Gehäuses erfolgen, das üblicherweise durch Taucher oder im Trockendock vom Fahrzeugrumpf abgeschraubt wird.

Es ist allgemein bekannt, Wasserfahrzeuge nicht nur mit einer Fahrtmeßanlage, sondern auch zusätzlich mit einem Echolot für die Messung der Wassertiefe unter Rumpf auszurüsten. Ein solches Echolot benötigt einen vertikal nach unten abstrahlenden elektroakustischen Wandler (Schallwandler oder Schallschwinger) zum Aussenden von Ultraschall und Empfang der am Gewässerboden reflektierten Schallechos und wird üblicherweise getrennt von den Sensoren der Fahrtmeßanlage an den Fahrzeugrumpf angebaut.

Bei einem bekannten Hydrophon (GB 23 06 848 A) ist zur Erzielung einer robusten Struktur ein piezoelektrischer Kristall auf der Außenseite eines Trägerlements befestigt und das Trägerelement in ein zylindrisches Gehäuse eingeschoben. Der Hohlraum zwischen Gehäuse und Trägerelement ist mit Flüssigkeit, vorzugsweise Öl, gefüllt. Dabei verbleiben ein oder mehrere Luftblasen in dem Hohlraum, die Schwingungen des Trägerelements und damit des piezoelektrischen Kristalls ermöglichen.

Ein bekannter Sender eines Ultraschall-Entfernungsmeßgerätes (DE 38 15 359 C2) weist zwei halbsäulenförmige Träger mit unterschiedlichen Krümmungsradien auf, die so angeordnet sind, daß ihre beiden flachen Seiten einander zugekehrt sind. Auf der Umfangsoberfläche eines jeden halbsäulenförmigen Trägers ist ein piezoelektrischer Vibrator angeordnet. Durch diesen konstruktiven Aufbau strahlt der Sender Ultraschallwellen ab, die Resonanzfrequenzen entsprechend den beiden Krümmungsradien enthalten.

Der Erfindung liegt die Aufgabe zugrunde, eine Unterwassersensoreinrichtung der eingangs genannten Art in Hinblick auf Kostenreduzierung, erleichterte Montage und Demontage und größere Wartungsfreundlichkeit zu verbessern.

Die Aufgabe ist bei einer Unterwassersensoreinrichtung der im Oberbegriff des Anspruchs 1 angegebenen Gattung erfindungsgemäß durch die Merkmale des Anspruchs 1 gelöst.

Die erfindungsgemäße Unterwassersensoreinrichtung hat den Vorteil, daß sie unabhängig von der Anzahl der im Wasserfahrzeug eingerüsteten Unterwassermeßanlagen mit zugeordneten Unterwassersensoren nur einen einzigen Unterbringungsort für die verschiedenen Sensoren benötigt, der beispielsweise durch Integration in ein Seeventil extrem montage- und wartungsfreundlich gestaltet werden kann. Durch die Zusammenfassung der Sensoren ist nur noch ein einziger Einbauplatz mit den für den Einbau erforderlichen Bauelementen, wie Gehäuse, Kabelrohr, Seeventil etc. vorhanden, so daß die Kosten für Bauteile und Arbeitsaufwand an weiteren Einbauplätzen eingespart werden können. Die Sensoreinrichtung kann grundsätzlich für zwei oder mehrere Sensoren konzipiert werden. Bei der Konzeption der Sensoreinrichtung für zwei Sensoren wird in dem Fall, daß nur ein Sensor benötigt wird, der weitere Formkörper von einem funktionslosen Füllstück, einem sog. Dummy, gebildet, das nur die Aufgabe hat, den Platz des Formkörpers auszufüllen. Im Falle, daß zwei Sensoren benötigt werden, wird der weitere Formkörper von einem weiteren Sensor gebildet, so daß die beiden Sensorkörper sich zu dem Vollzylinder ergänzen. Bei der Konzeption der Sensoreinrichtung für drei Sensoren sind neben dem Sensor-Formkörper zwei weitere Formkörper vorhanden, von denen beide einen Dummy oder beide einen Sensor darstellen können oder einer einen Dummy und der andere einen Sensor bildet.

Zweckmäßige Ausführungsformen der erfindungsgemäßen Unterwassersensoreinrichtung mit vorteilhaften Weiterbildungen und Ausgestaltungen der Erfindung ergeben sich aus den weiteren Ansprüchen.

Die Erfindung ist anhand von in der Zeichnung dargestellten Ausführungsbeispielen im folgenden näher beschrieben. Es zeigen jeweils in schematischer Darstellung:
- Fig. 1: eine Explosionsdarstellung einer Unterwassersensoreinrichtung für zwei in ein Wasserfahrzeug eingerüstete Unterwassermeßanlagen,
- Fig. 2: eine perspektivische Darstellung einer Unterwassersensoreinrichtung für zwei in einem Wasserfahrzeug eingerüstete Unterwassermeßanlagen gemäß einem weiteren Ausführungsbeispiel
- Fig. 3: eine Seitenansicht einer Anordnung der Unterwassersensoreinrichtung gemäß Fig. 1 oder Fig. 2 in einem Seeventil, teilweise geschnitten,
- Fig. 4: einen Längsschnitt einer Anordnung einer Unterwassersensoreinrichtung für zwei Unterwassermeßanlagen in einem im Schiffsrumpf eingelassenen Gehäuse,
- Fig. 5: eine Explosionsdarstellung der Unterwassersensoreinrichtung in Fig. 4.

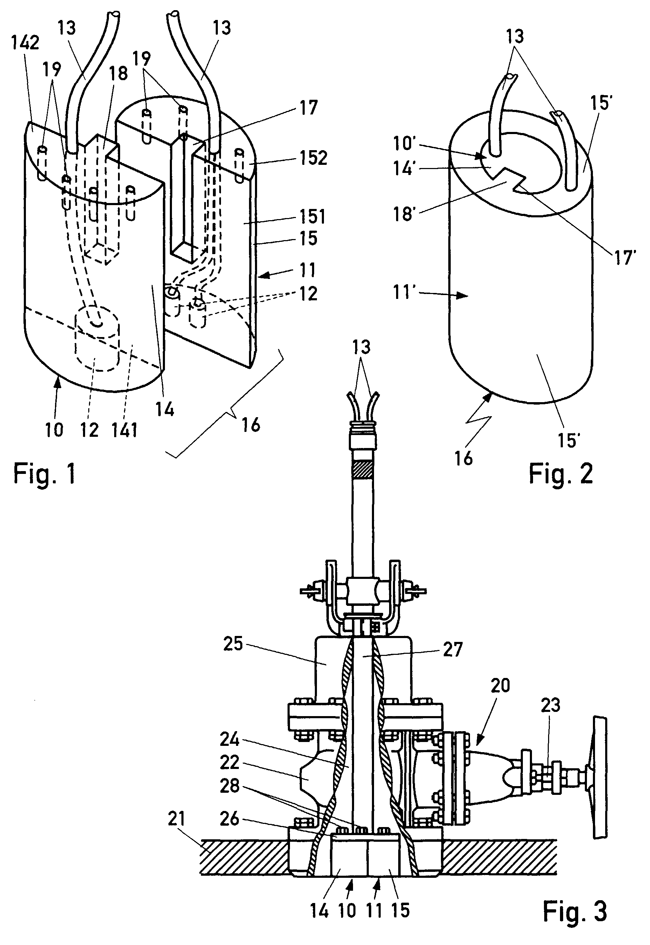

Die in Fig. 1 in Explosionsdarstellung teilweise schematisiert skizzierte Unterwassersensoreinrichtung umfaßt zwei Sensoren 10,11 für zwei in ein hier nicht dargestelltes Wasserfahrzeug, vorzugsweise Schiff, eingerüstete Unterwassermeßanlagen. Der Sensor 10 ist als elektroakustischer Wandler mit einem Wandlerelement 12 ausgebildet, der an einem Echolot angeschlossen ist. Der Sensor 11 ist ebenfalls ein elektroakustischer Wandler mit einer Mehrzahl von Wandlerelementen 12, von denen hier nur zwei dargestellt sind, und ist an einer Fahrtmeßanlage, die üblicherweise als Dopplerlog ausgebildet ist, angeschlossen. Die Wandlerelemente 12 sind zusammen mit elektrischen Anschlußleitungen 13 in einem Formkörper 14 bzw. 15 aus Kunststoff, z.B. Polyurethan, vergossen. Die Anschlußleitungen 13 der Wandlerelementen sind aus dem Formkörper 14 bzw. 15 herausgeführt und stellen die Verbindung zur Sende- und Empfangseinrichtung des Echolots bzw. des Dopplerlogs her.

Die Formgestaltung der beiden Formkörper 14, 15 ist so vorgenommen, daß sie zu einem Vollzylinder 16 zusammengesetzt werden können. Im Ausführungsbeispiel der Fig. 1 ist jeder Formkörper 14, 15 als Halbzylinder ausgebildet, und die beiden Halbzylinder liegen mit ihren planen Flächen 141 und 151 in der Längsachsenebene des Vollzylinders 16 aneinander. Dabei sind die aneinanderstoßenden planen Flächen 141, 151 der beiden Formkörper 14, 15 so strukturiert, daß die Formkörper gegen Radialverschiebung und/oder Verdrehung relativ zueinander gesichert sind. Dies wird im Ausführungsbeispiel der Fig. 1 dadurch erreicht, daß in die plane Fläche 151 des Formkörpers 15 eine Axialnut 17 eingearbeitet ist, in die eine an dem Formkörper 14 einstückig angeformte, über die plane Fläche 141 vorstehende Axialrippe 18 formschlüssig eingreift.

In Fig. 2 ist ein modifiziertes Ausführungsbeispiel der ebenfalls aus zwei Sensoren 10' und 11' bestehenden Unterwassersensoreinrichtung dargestellt. Abweichend von Fig. 1 ist hier der Formkörper 15' als Hohlzylinder und der Formkörper 14' als Massivzylinder ausgebildet, der formschlüssig in den Hohlzylinder eingesetzt ist. Die beiden Formkörper 14', 15' sind wiederum durch eine an dem Formkörper 15' ausgebildete Axialrippe 18' und eine im Formkörper 14' ausgebildete Axialnut 17', die formschlüssig ineinandergreifen, gegen Relativdrehung miteinander verriegelt.

In Fig. 3 ist die Integration der Unterwassersensoreinrichtung mit den beiden zu einem Vollzylinder 16 zusammengesetzten Sensoren 10 und 11 gemäß Fig. 1 oder Sensoren 10' und 11' gemäß Fig. 2 in einem Seeventil dargestellt. Die Vereinigung der Unterwassersensoreinrichtung mit einem Seeventil in einer Baueinheit hat den Vorteil, daß die Unterwassersensoreinheit bei fahrendem Schiff gewartet und bei Beschädigung ausgewechselt werden kann, indem sie aus ihrer in Fig. 3 dargestellten Betriebslage eingezogen und anschließend das Seeventil geschlossen wird. Das in Fig. 3 mit 20 bezeichnete Seeventil weist einen in den Schiffsboden 21 eingesetzten Ventilkörper 22 und einen von Hand oder motorisch betätigten Ventilschieber 23 auf, mit dem eine Ventilöffnung 24 wahlweise geöffnet oder geschlossen werden kann. Die beiden Sensoren 10, 11 sind über Axialrippe 18 und Axialnut 17 zu dem Vollzylinder 16 zusammengefügt und an einem Flansch 26 einer hohlen Hubstange 27 auswechselbar befestigt. Hierzu sind in die Stirnflächen 142, 152 der Formkörper 14, 15 Gewindestücke 19 eingesetzt (Fig. 1), in die durch Flanschlöcher hindurchgeführte Schrauben 28 (Fig 3) eingeschraubt sind. Die Anschlußleitungen 13 der Wandlerelemente 12 sind durch die hohle Hubstange 27 hindurch zu der zugeordneten Unterwassermeßanlage geführt. Die Hubstange 27 kann bei geöffnetem Seeventil 20 durch die Ventilöffnung 24 hindurch ausgefahren und eingezogen werden und wird dabei abgedichtet durch eine das Seeventil 20 bordseitig verschließende Kappe 25 hindurchgeführt, die bei eingefahrener Hubstange 27 den Flansch 26 mit Sensoren 10, 11 aufnimmt, so daß das Seeventil 20 mittels des Ventilschiebers 23 geschlossen werden kann.

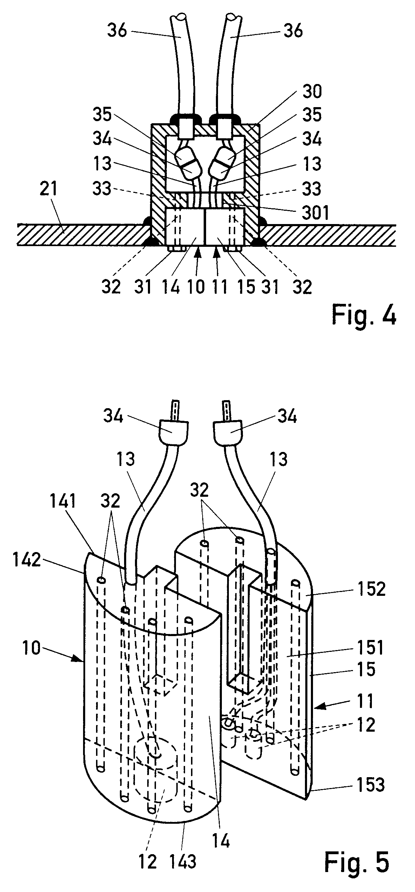

Bei dem in Fig. 4 skizzierten Beispiel der Anbringung der Unterwassersensoreinrichtung am Schiff ist in dem Schiffsboden 21 ein topfförmiges Gehäuse 30 wasserdicht eingesetzt, dessen Topföffnung zur Unterseite des Schiffsbodens 21 weist und mit Wasser geflutet ist. Die beiden zu dem Vollzylinder 16 zusammengesetzten Sensoren 10, 11, wie sie in Fig. 5 dargestellt sind, sind einzeln an einem im Gehäuse 30 ausgebildeten Ringflansch 301 befestigt, wozu Schraubenbolzen 31 von den von dem Ringflansch 301 abgekehrten unteren Stirnflächen 143, 153 der Formkörper 14, 15 her, durch in den Formkörpern 14, 15 ausgebildete Durchgangslöcher 32 hindurchgesteckt und in korrespondierenden Gewindelöchern 33 im Ringflansch 301 verschraubt sind. Die aus dem Formkörper 14, 15 austretenden Anschlußleitungen 13 für die Wandlerelmente 12 sind jeweils mit einem Stecker 34 versehen, der mit einem Gegenstecker 35 einer weiterführenden Leitung 36 eine wasserdichte Steckverbindung bildet. Die Leitungen 36 führen zu den Unterwassermeßanlagen, im Fall des Sensors 10 an die Sende- und Empfangseinrichtung des Echolots und im Fall des Sensors 11 an die Sende- und Empfangseinrichtung des Dopplerlogs. Ein Ausbau der Unterwassersensoreinrichtung kann im Trockendock oder durch Taucher hervorgenommen werden, wobei die Sensoren 10, 11 einzeln auszubauen sind.

Die Erfindung ist nicht auf die beschriebenen Ausführungsbeispiele einer zwei Sensoren umfassenden Unterwassersensoreinrichtung beschränkt. Für den Fall, daß eine im Schiff eingerüstete Unterwassermeßanlage lediglich einen Sensor erfordert, beispielsweise den elektroakustischen Wandler 10 für das Echolot, so wird der andere Formkörper 15 durch ein funktionsloses Füllstück gleicher Dimensionierung, einem sog. Dummy, ersetzt. Sensor und Dummy ergeben dann wiederum den Vollzylinder 16, der in der in Fig. 3 oder 4 gezeigten Anordnung in den Schiffsrumpf eingebaut werden kann.

Werden für die im Schiff eingerüsteten Unterwassermeßanlagen, beispielsweise drei Sensoren benötigt, so wird jeder Sensor mit einem Formkörper ausgestattet, der einem über 120° Umfangswinkel sich erstreckenden Zylindersegment entspricht. Diese drei Formkörper werden wiederum zu dem Vollzylinder 16 zusammengesetzt. Eine solche aus drei Sensoren bestehende Unterwassersensoreinrichtung wird benötigt, wenn die Schiffskonzeption den Einbau von z.B. einem Echolot, einer elektroakustischen Fahrtmeßanlage sowie einer elektromagnetischen Fahrtmeßanlage vorsieht. Auch hier kann der Vollzylinder so ausgelegt werden, daß er grundsätzlich aus drei Formkörpern zusammengesetzt ist. Entfällt ein Sensor, weil die entsprechende Unterwassermeßanlage nicht in das Schiff eingerüstet wird, so wird der fehlende Sensor wiederum durch ein funktionsloses Füllstück gleicher Gestalt ersetzt.

## Patentansprüche

1. Unterwassersensoreinrichtung für mindestens eine in einem Wasserfahrzeug eingerüstete Unterwassermeßanlage, wie z.B. Echolot oder Fahrgeschwindigkeitsmesser, mit mindestens einem in Wasser eintauchenden Sensor (10 oder 11), der als mindestens ein Sensorelement (12) umschließender Formkörper (14 oder 15) ausgebildet ist, gekennzeichnet durch eine solche Formgestaltung des Formkörpers (14 oder 15), daß dieser mittels mindestens eines austauschbaren weiteren Formkörpers (14 oder 15) zu einem Vollzylinder (16) ergänzbar ist, und daß der mindestens eine austauschbare weitere Formkörper (15 oder 14) ein Sensor (11 oder 10) für eine weitere Unterwassermeßanlage oder ein funktionsloses Füllstück (Dummy) ist.

2. Einrichtung nach Anspruch 1, dadurch gekennzeichnet, daß der aus den Formkörpern (14, 15) zusammengesetzte Vollzylinder (16) mit seiner einen Zylinderstirnfläche (142, 152) an einem Flansch (26) einer hohlen Hubstange (27) befestigt und in einem Seeventil (20) auswechselbar integriert ist.

3. Einrichtung nach Anspruch 1, dadurch gekennzeichnet, daß die Formkörper (14, 15) mit ihrer einen ebenen Stirnfläche (142, 152) an einem Befestigungsflansch (301) befestigt sind, der in einem in den Fahrzeugboden (21) eingelassenen Gehäuse (30) so ausgebildet ist, daß der Vollzylinder (16) bündig mit dem Fahrzeugboden (21) abschließt.

4. Einrichtung nach einem der Ansprüche 1 - 3, dadurch gekennzeichnet, daß die aneinanderstoßenden Flächen (141, 151) der Formkörper (14, 15) so strukturiert sind, daß die Formkörper (14, 15) gegen eine Radialverschiebung und/oder Verdrehung gegeneinander fixiert sind.

5. Einrichtung nach Anspruch 4, dadurch gekennzeichnet, daß die Fixierung durch Axialnuten (17) in der einen und in diese formschlüssig eingreifende Axialrippen (18) an der anderen der aneinanderstoßenden Flächen (141, 151) vorgenommen ist.

6. Einrichtung nach einem der Ansprüche 1 - 5, dadurch gekennzeichnet, daß der eine Sensor (10) ein elektroakustischer Wandler für eine elektroakustische Fahrtmeßanlage (Dopplerlog) ist und der andere Sensor (11) einen elektroakustischen Wandler für ein Echolot darstellt.

7. Einrichtung nach einem der Ansprüche 1 - 6 dadurch gekennzeichnet, daß die Formkörper (14, 15) jeweils als Halbzylinder ausgebildet sind, die mit ihren planen Flachen (141, 151) in der Längsachsenebene des Vollzylinders (16) aneinanderliegen.

8. Einrichtung nach einem der Ansprüche 1 - 6, dadurch gekennzeichnet, daß der eine Formkörper (15') als Hohlzylinder und der weitere Formkörper (14') als Massivzylinder ausgebildet ist, der formschlüssig in den Hohlzylinder eingesetzt ist.

9. Einrichtung nach Anspruch 6, dadurch gekennzeichnet, daß ein zweiter austauschbarer Formkörper von einem Sensor gebildet ist, der eine elektromagnetische Meßsonde für eine elektromagnetische Fahrtmeßanlage (EM-Log) darstellt.
